# EUROPÄISCHE PATENTSCHRIFT

(11) **EP 1 524 076 B1**
(45) Veröffentlichungstag und Bekanntmachung des Hinweises auf die Patenterteilung: **27.04.2005**
(21) Anmeldenummer: 03023102.1
(22) Anmeldetag: 10.10.2003
(51) Int. Cl.: B24B 41/02, B23Q 39/04, B23Q 1/48

(54) **Werkzeugmaschine zum Schleifen von Futterteilen**
Apparatus for grinding pieces for chucks.
Appareil de meulage pour des pièces de mandrin

(43) Veröffentlichungstag der Anmeldung: 20.04.2005
(73) Patentinhaber: ILG GmbH, 71554 Weissach i.T. (DE); Lehman-Consulting, 3700 Spiez (CH)
(72) Erfinder: Lehmann, Werner, 3700 Spiez (CH); Ilg, Herbert, 71554 Weissach (DE)
(74) Vertreter: Manitz, Finsterwald & Partner GbR

(56) Entgegenhaltungen:
- DE-A- 19 521 846
- DE-A- 19 904 859
- DE-A- 19 915 286

## Beschreibung

Die vorliegende Erfindung betrifft eine Werkzeugmaschine zum Schleifen von Futterteilen, insbesondere Universal-Rundschleifmaschine zum Innen-, Plan- und Außenschleifen, mit einem Maschinenständer, einer Werkstückhaltevorrichtung, insbesondere Werkstückspindel, und zwei oder mehr Werkzeugen, bei welcher die Werkstückhaltevorrichtung und die Werkzeuge jeweils an einer Seitenwand des Maschinenständers längs mindestens zwei Achsen gegeneinander bewegbar angeordnet sind, wobei die Werkstückhaltevorrichtung längs einer vertikalen Achse bewegbar und um eine zur zugehörigen Seitenwand des Maschinenständers senkrechte Achse schwenkbar ist.

Bei bekannten Rundschleifmaschinen für Futterteile ist üblicherweise sowohl die Werkstückspindel als Werkstückhaltevorrichtung wie auch die Schleifvorrichtung stehend auf einem liegenden Maschinenbett beweglich angeordnet. Bekannte Hartdrehmaschinen mit Schleifvorrichtung weisen üblicherweise eine vertikale, nicht schwenkbare Werkstückspindel auf, die auf einem Kreuzschlitten angeordnet ist, wobei die Werkstücke für das Hartdrehen und Schleifen senkrecht in fix angeordnete Hartdreh- und Schleifvorrichtungen eingebracht werden.

Beide Maschinenkonzepte sind verhältnismäßig voluminös. Zudem ist die Beschickung wie auch das Einrichten dieser Maschinen umständlich. Für die Rundschleifmaschinen sind zum Automatisieren aufwändige Portallader oder Roboter erforderlich. Die Hartdrehmaschinen können nicht universell, das heißt, nicht für manuelles Be- und Entladen eingesetzt werden, und sind aufgrund des Kreuzschlittens bezüglich der integrierten Schleiftechnologie nicht optimal, da die Schleifdorne in vertikaler Achse von unten in das zu bearbeitende Werkstück eingeführt werden.

Dokument DE 199 04 859 A offenbart eine Werkzeugmaschine, mit einem Maschinenständer, einer an einer Seitenwand des Maschinenständers in vertikaler Richtung verfahrbaren und um eine zur zugehörigen Seitenwand des Maschinenständers senkrechte Achse schwenkbaren Werkstückhaltevorrichtung, und mindestens einem an derselben Seitenwand des Maschinenständers in horizontaler Richtung verfahrbaren Werkzeug, wobei für die vertikale Bewegung der Werkstückhaltevorrichtung und für die horizontale Bewegung der Werkzeuge jeweils ein einachsiger Linearschlitten mit gemeinsamer vertikaler Schlittenbewegungsebene vorgesehen ist.

Eine Werkzeugmaschine der eingangs genannten Art ist aus der DE 195 21 846 A bekannt. Bei dieser Werkzeugmaschine sind zwei in einer gemeinsamen vertikalen Ebene verfahrbare, um horizontale Achsen schwenkbare Spindelstöcke vorhanden, die jeweils auf voneinander abgewandten Seiten ein rotierendes Werkstückspannmittel und mindestens eine Werkzeugaufnahme tragen. Dadurch können zwei verschiedene Werkzeuge unmittelbar nacheinander eingesetzt werden. Die Konstruktion ist jedoch aufwendig und beansprucht relativ viel Platz.

Der Erfindung liegt die Aufgabe zugrunde, eine Werkzeugmaschine der eingangs genannten Art anzugeben, welche diese Nachteile nicht aufweist. Insbesondere soll die Maschine einen platzsparenden Aufbau aufweisen, sowohl automatisiert mit einer Selbstbeschickung nach dem Pickupverfahren als auch mit manueller Beschickung eingesetzt werden können und in konstruktiv einfacher Weise einen vielseitigen Einsatz ermöglichen.

Diese Aufgabe wird durch die Merkmale des Anspruchs 1 gelöst.

Durch die Schwenkbarkeit der Werkstückhaltevorrichtung können konische Innen- und Außenbearbeitungen am Werkstück auch ohne Interpolationsbewegungen der Achse, das heißt, allein mit einer geradlinigen Zustellbewegung, ausgeführt werden. Die vertikale Bewegbarkeit der Werkstückhaltevorrichtung kann zusammen mit ihrer Schwenkbarkeit um eine horizontale Achse eine Selbstbeschickung der Werkzeugmaschine ermöglichen. Hierfür wird die Werkstückhaltevorrichtung soweit verschwenkt, dass ihre Werkstückaufnahmevorrichtung nach unten weist. Durch Verfahren der Werkstückhaltevorrichtung nach unten kann ein zu bearbeitendes Werkstück aufgenommen werden. Durch Zurückfahren und Zurückschwenken der Werkstückhaltevorrichtung wird das Werkstück dann in Bearbeitungsposition gebracht. Nach der Bearbeitung kann das Werkstück in entsprechender Weise wieder automatisch abgelegt werden.

Außerdem hat die vertikale Bewegbarkeit der Werkstückhaltevorrichtung den Vorteil, dass ein aufgespanntes Werkstück ohne Umspannen nacheinander mit mehreren Werkzeugen bearbeitet werden kann. Die Werkzeuge sind hierfür vertikal übereinander angeordnet, und die Werkstückhaltevorrichtung verfährt das Werkstück entsprechend dem jeweils einzusetzenden Werkzeug in vertikaler Richtung.

Durch die genannten Merkmale kann die erfindungsgemäße Werkzeugmaschine einschließlich automatischer Beschickung auch besonders platzsparend aufgebaut werden. Es ist aber auch eine manuelle Beschickung möglich, indem die Werkstückhaltevorrichtung nicht verschwenkt wird. Für die manuelle Beschickung ist bevorzugt eine Zugriffsmöglichkeit von der Vorderseite der Werkzeugmaschine her vorgesehen.

Besonders bevorzugt ist es, wenn die Werkstückhaltevorrichtung stufenlos um die horizontale Achse verschwenkbar ist. Dadurch können beliebige konische Bearbeitungen durchgeführt werden. Um eine einfache Durchführung derartiger Bearbeitungen zu ermöglichen, ist die Schwenkachse der Werkstückhaltevorrichtung außerdem bevorzugt als NC-Achse ausgebildet.

Ein geschickter Aufbau der Werkzeugmaschine ergibt sich, wenn die Werkstückhaltevorrichtung und die Werkzeuge nebeneinander an der Vorderwand des Maschinenständers angeordnet sind. Neben der Platzersparnis ermöglicht dies auch einen besonders guten Zugriff von der Vorderseite der Werkzeugmaschine her für die manuelle Beschickung.

Als vorteilhaft hat es sich auch herausgestellt, die Werkzeuge horizontal auszurichten. Dies ist besonders platzsparend.

Neben Innen- und Außenschleifwerkzeugen kann die erfindungsgemäße Werkzeugmaschine auch mit Hartdrehwerkzeugen ausgerüstet sein. Vorteilhaft ist insbesondere die Kombination beider Werkzeugarten, wodurch die Werkzeugmaschine als komplettes Hartdreh- und Schleifzentrum eingesetzt werden kann. Das Hartdrehen der Werkstücke ermöglicht ein schnelles und unaufwändiges Schleifen und ist bei der erfindungsgemäßen Maschine ohne Umspannen möglich.

Vorteilhaft ist auch der Einsatz von Honwerkzeugen möglich. Der Einsatzbereich der Maschine kann dadurch weiter vergrößert werden.

Besonders bevorzugt ist es außerdem, wenn die Werkzeuge längs einer horizontalen Achse bewegbar sind, insbesondere mittels eines kurzhubigen Schlittens. Zusammen mit der vertikalen Bewegbarkeit der Werkstückhaltevorrichtung können so alle notwendigen Zustell-, Bearbeitungsund Abrichtbewegungen ohne Kreuzschlitten ausgeführt werden. Die Einrichtung ist dadurch besonders stabil.

Für die Selbstbeschickung der Werkzeugmaschine nach dem Pickupverfahren ist nach einer weiteren Ausgestaltung der Erfindung direkt unter der Werkstückhaltevorrichtung eine insbesondere getaktete Werkstückzuführeinrichtung angeordnet. Hierbei kann es sich beispielsweise um ein Transportband, eine Transportkette oder um einen Drehtisch handeln. Durch diese Anordnung genügt ein kurzer Hub für die automatische Beschickung der Werkzeugmaschine, wodurch diese wiederum besonders platzsparend aufgebaut werden kann. Außerdem ergibt sich dadurch eine kurze Be- und Entladezeit.

Eine weitere Platzersparnis ergibt sich, wenn mehrere Werkzeuge auf einem gemeinsamen Schlitten angeordnet sind. Auch kann dadurch Material eingespart und der Herstellungsaufwand verringert werden, und es ergibt sich ein vorteilhafter Aufbau.

Nach einer weiteren Ausgestaltung der Erfindung sind beidseits der Werkstückhaltevorrichtung, insbesondere symmetrisch, Werkzeuge angeordnet und ist die Werkstückhaltevorrichtung von der einen Seite zur anderen Seite verschwenkbar. Durch diesen Aufbau können noch weitere Werkzeuge vorteilhaft eingesetzt werden, insbesondere Hartdrehwerkzeuge neben den Schleifwerkzeugen. Auf beiden Seiten sind die Werkzeuge dabei wieder bevorzugt auf je einem Schlitten horizontal verfahrbar. Es ergeben sich die zuvor genannten Vorteile.

Besonders bevorzugt ist es, wenn auf einer Seite der Werkstückhaltevorrichtung ein oder mehr Schleifwerkzeuge und auf der anderen Seite der Werkstückhaltevorrichtung ein oder mehr Hartdrehwerkzeuge angeordnet sind. Durch diese Anordnung können das Schleifen und das Hartdrehen an voneinander getrennten Orten durchgeführt werden. Kühlmittel kann dadurch nicht zu den Hartdrehvorrichtungen gelangen und diese beschädigen oder zerstören. Außerdem ist es dadurch möglich, die Kühlmittelabführung und die Späneabführung räumlich voneinander zu trennen. Dies ist hinsichtlich der Entsorgung besonders vorteilhaft.

Nach einer weiteren Ausgestaltung der Erfindung kann die Werkzeugmaschine außerdem eine feste oder rotierende Abrichtvorrichtung aufweisen, die insbesondere zusammen mit der Werkstückhaltevorrichtung verschwenkbar und alternativ zu dieser aktivierbar ist. Hierfür ist die Abrichtvorrichtung vorteilhafterweise auf der Schwenkvorrichtung der Werkstückhaltevorrichtung, insbesondere mit dieser auf einem Drehteller angeordnet.

Platzsparend ist es außerdem, wenn ein Elektroschrank zur Versorgung und Steuerung der erfindungsgemäßen Werkzeugmaschine seitlich des Maschinenständers und ein Geräteschrank mit Luftaufbereitung, Hydraulik und Ventilen hinter dem Maschinenständer angeordnet ist. Zusammen mit einer Verschalung kann so eine kompakte Einheit gebildet werden.

Nicht beschränkende Ausführungsbeispiele der Erfindung sind in den Zeichnungen dargestellt und werden nachfolgend beschrieben. Es zeigen, jeweils in schematischer Darstellung:
- Fig. 1: eine perspektivische Ansicht einer ersten Variante der erfindungsgemäßen Werkzeugmaschine,
- Fig. 2: eine Aufrissdarstellung der Werkzeugmaschine von Fig. 1,
- Fig. 3: eine Grundrissdarstellung der Werkzeugmaschine von Fig. 1,
- Fig. 4: eine Seitenrissdarstellung der Werkzeugmaschine von Fig. 1,
- Fig. 5: eine perspektivische Ansicht einer zweiten Variante der erfindungsgemäßen Werkzeugmaschine und
- Fig. 6: eine Aufrissdarstellung der Werkzeugmaschine von Fig. 5.

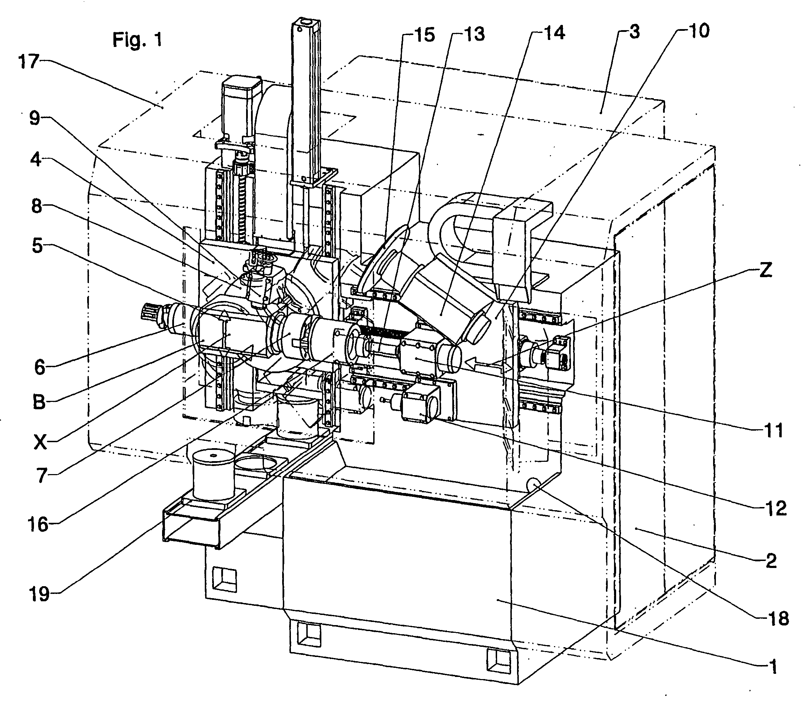

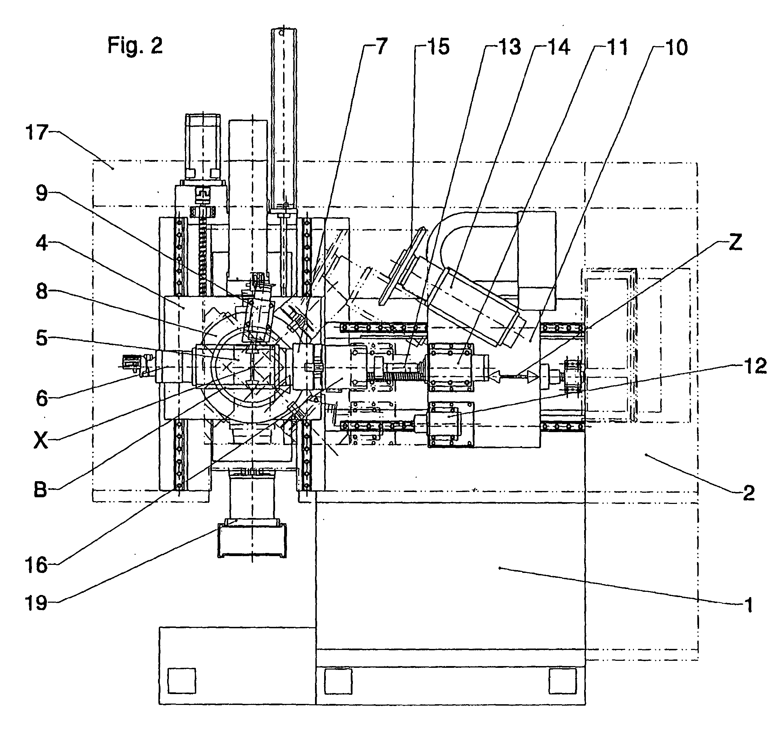

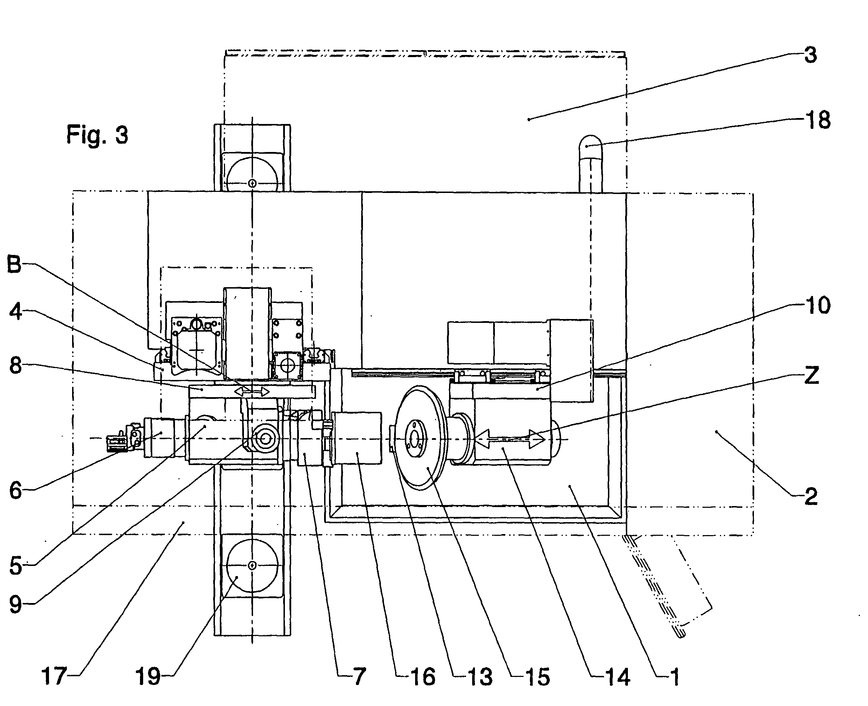

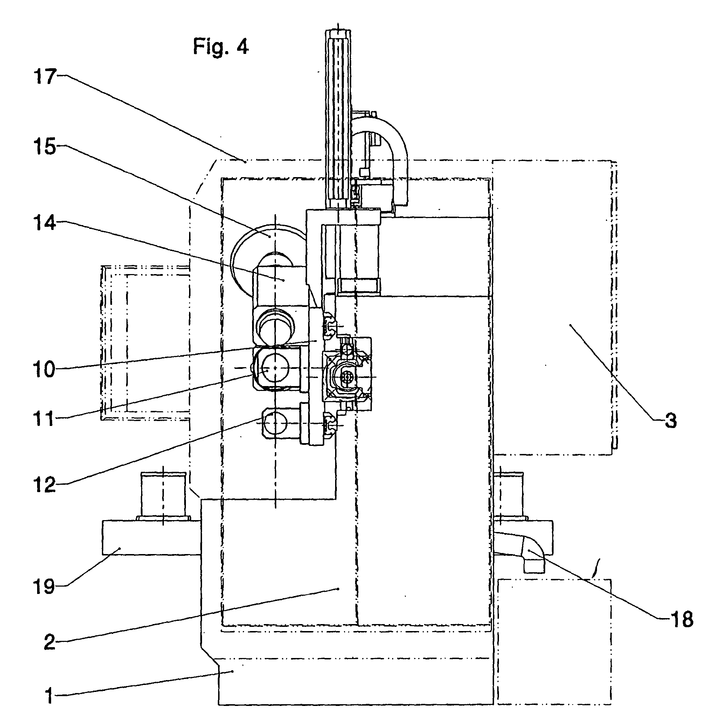

Die in den Fig. 1 bis 4 dargestellte erste Variante der erfindungsgemäßen Werkzeugmaschine umfasst einen Maschinenständer 1 mit einer Verschalung 17, einen seitlich an die Verschalung 17 anschließenden Elektroschrank 2 und einen hinter dem Maschinenständer 1 separat angebauten Geräteschrank 3. Auf seiner Vorderseite weist der Maschinenständer 1 einen vertikal verfahrbaren Querschlitten 4 (X-Achse) und einen horizontal verfahrbaren Längsschlitten 10 (Z-Achse) auf, die in einer gemeinsamen vertikalen Ebene bewegbar sind.

Dem Querschlitten 4 ist eine horizontale Schwenkachse (B-Achse) mit stirnseitig montiertem Rotationsteller 8 mit darauf angeordneter Werkstückspindel 5 mit Spannfutter 7 und Abrichtspindel 9 zugeordnet. Mit der Schwenkachse (B) wird ein Schwenkwinkelbereich von +90° bis -45° zur Z-Achse realisiert.

Am Längsschlitten 10 sind frontseitig in einer vertikalen Ebene übereinander angeordnet zwei horizontale Innenschleifspindeln 11, 12 mit Innenschleifscheiben 13 und eine unter 30° zur Z-Achse schräg stehende Außenschleifspindel 14 mit einer Außenschleifscheibe 15 angebracht. Durch Bewegen der Schleifvorrichtungen 11, 12, 14 in Richtung der Z-Achse und des Drehtellers 8 mit Werkstückspindel 5 und Abrichtvorrichtung 9 in Richtung der X-Achse wird ein Bearbeitungs- und Abrichteingriff mit Linear- oder Interpolationsbewegungen ermöglicht.

Zum Bearbeiten kann das Werkstück 16 manuell oder automatisch in das mit einem Spannzylinder 6 betätigte Spannfutter 7 oder in ein Vorderendfutter eingesetzt werden. Das manuelle Be- und Entladen erfolgt durch eine in der Verschalung 17 vorgesehene Tür bei horizontal geschwenkter Werkstückspindel 5 und bei stillstehenden Querschlitten 4 und Längsschlitten 10.

Aufgrund der kombinierten X/B-Achsenfunktion können die Werkstücke 16 außerdem in einem programmierbaren Zyklusablauf bei senkrecht abgeschwenkter Werkstückspindel 5 automatisch von einem direkt darunter angeordneten, durch den Maschinenständer 1 hindurchgeführten Werkstückspeicher 19 aufgenommen und nach Zurückschwenken für die horizontale Schleifoperation in einen zylindrischen oder konischen Bearbeitungseingriff und mit der Abrichtspindel 9 in den Abrichteingriff zu den Innen- und Außenschleifspindeln 11, 12, 14 gebracht werden. In umgekehrter Reihenfolge können die bearbeiteten Werkstücke wieder auf dem Werkstückspeicher 19 abgelegt werden.

Dank der möglichen Winkelstellung des Werkstücks 16 durch die Schwenkachse (B) können konische Innen- und Außenbearbeitungen am Werkstück auch ohne Interpolationsbewegungen der Achsen, das heißt, direkt mit der horizontalen Oszillationsbewegung der Schleifscheiben über den Längsschlitten 10 und mit der Zustellbewegung des Querschlittens 4 ausgeführt werden.

Das für das Schleifen erforderliche Kühlmittel wird von der direkt unterhalb der Schleifvorrichtungen 11, 12, 14 angeordneten Kühlmittelwanne zur Kühlmittelabführung 18 geleitet.

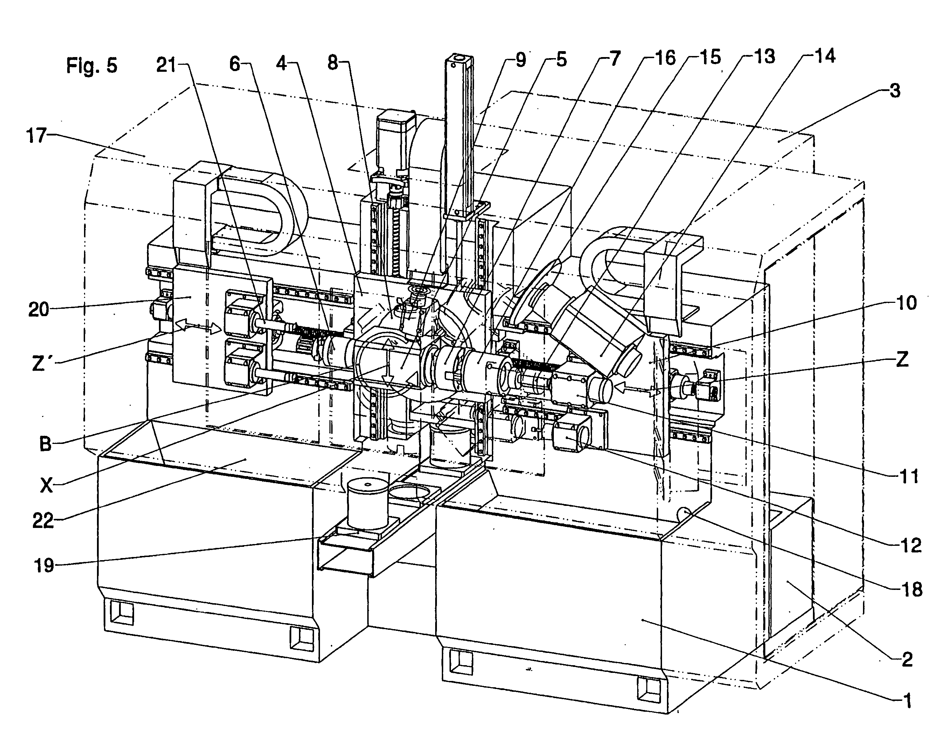

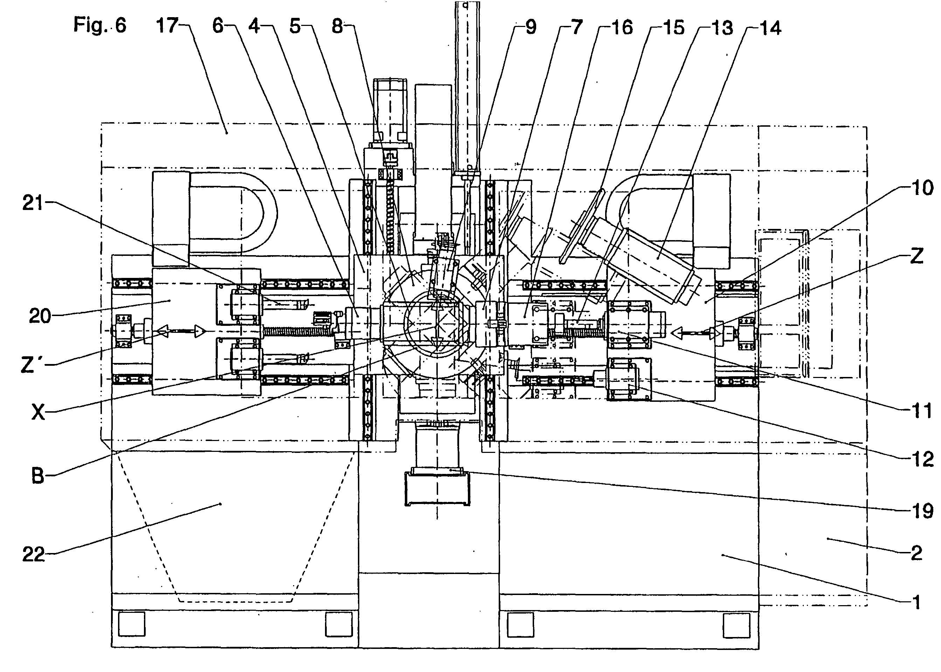

Die in den Fig. 5 und 6 dargestellte zweite Variante der erfindungsgemäßen Werkzeugmaschine weist ebenfalls einen Maschinenständer 1, einen seitlich an die Verschalung 17 des Maschinenständers 1 anschließenden Elektroschrank 2 und einen hinter dem Maschinenständer separat angebauten Geräteschrank 3 auf. Auf der Vorderseite des Maschinenständers 1 ist wiederum ein senkrecht verfahrbarer Querschlitten 4 (X-Achse) und ein horizontal verfahrbarer Längsschlitten 10 (Z-Achse) vorgesehen.

Zusätzlich weist die zweite Variante symmetrisch zum Querschlitten 4 einen zweiten horizontal verfahrbaren Längsschlitten 20 auf (Z'-Achse), der in derselben vertikalen Ebene wie der Querschlitten 4 und der erste Längsschlitten 10 verfahrbar ist. Am zweiten Längsschlitten 20 sind frontseitig in einer vertikalen Ebene horizontal übereinander angeordnete Drehwerkzeugaufnahmen 21 angebracht, die durch Verfahren des zweiten Längsschlittens 20 in Richtung der Z'-Achse und des Querschlittens 4 mit Werkstückspindel 5 in Richtung der X-Achse mit einem Werkstück 16 in Bearbeitungseingriff für das Hartdrehen gebracht werden können.

Die Werkstücke 16 können bei dieser kombinierten Hartdreh- und Schleifmaschine in derselben Weise wie bei der ersten Variante in einem programmierbaren Zyklusablauf automatisch vom Werkstückspeicher 19 be- und auf diesen entladen werden, sowie mit dem Längsschlitten 10 (Z-Achse) zum Schleifen und Abrichten und mit dem Längsschlitten 20 (Z'-Achse) zum Hartdrehen in einen zylindrischen oder konischen Bearbeitungseingriff gebracht werden.

Die dem Querschlitten 4 zugeordnete Schwenkachse (B-Achse) mit stirnseitig montiertem Rotationsteller 8 mit darauf angeordneter Werkstückspindel 5 mit Spannfutter 7 und Abrichtvorrichtung 9 hat bei dieser Variante einen Schwenkwinkelbereich von +180° bis -45° zur Z-Achse, so dass das Werkstück 16 sowohl in den Bearbeitungsbereich der Schleifvorrichtungen als auch der Hartdrehvorrichtungen gebracht werden kann.

Wie man sieht, zeichnen sich beide Varianten der erfindungsgemäßen Werkzeugmaschine durch einen einfachen und kompakten Aufbau aus. Der Bearbeitungsbereich der Maschine ist sowohl zum Einrichten als auch für das manuelle Be- und Entladen der Werkstücke sehr gut zugänglich. Durch die räumlich getrennte Anordnung der Schleif- und Hartdrehvorrichtungen kann der Schmutzbereich vom Werkstück ferngehalten werden. Außerdem kann das Kühlmittel durch die Kühlmittelabführung 18 im Schleifbereich und die Späne durch die Späneabführung 22 im Hartdrehbereich in einfacher Weise aufgefangen und weitertransportiert werden.

### Bezugszeichenliste

- 1: Maschinenständer
- 2: Elektroschrank
- 3: Geräteschrank
- 4: Querschlitten
- 5: Werkstückspindel
- 6: Spannzylinder
- 7: Spannfutter
- 8: Rotationsteller
- 9: Abrichtvorrichtung
- 10: Längsschlitten
- 11: Innenschleifspindel
- 12: Innenschleifspindel
- 13: Innenschleifscheibe
- 14: Außenschleifspindel
- 15: Außenschleifscheibe
- 16: Werkstück
- 17: Verschalung
- 18: Kühlmittelabführung
- 19: Transportband
- 20: zweiter Längsschlitten
- 21: Drehwerkzeugaufnahme
- 22: Späneabführung
- B: Schwenkachse
- X: Linearachse
- Z: Linearachse
- Z': Linearachse

## Patentansprüche

1. Werkzeugmaschine zum Schleifen von Futterteilen, insbesondere Universal-Rundschleifmaschine zum Innen-, Plan- und Außenschleifen, mit einem Maschinenständer (1), einer an einer Seitenwand des Maschinenständers (1) in vertikaler Richtung (X-Achse) verfahrbaren und um eine zur zugehörigen Seitenwand des Maschinenständers ( 1 ) senkrechte Achse (B) schwenkbaren Werkstückhaltevorrichtung (5), insbesondere Werkstückspindel, einer Abrichtvorrichtung (9), und mindestens einem an derselben Seitenwand des Maschinenständers (1) in horizontaler Richtung (Z-Achse) verfahrbaren Schleifwerkzeug, insbesondere Außenschleifspindel (14) und Innenschleifspindeln (11, 12), wobei für die vertikale Bewegung der Werkstückhaltevorrichtung (5) und für die horizontale Bewegung der Schleifwerkzeuge jeweils ein einachsiger Linearschlitten (4, 10, 20) mit gemeinsamer vertikaler Schlittenbewegungsebene vorgesehen ist und wobei die Abrichtvorrichtung (9) zusammen mit der Werkstückhaltevorrichtung (5) auf deren einachsigem Linearschlitten (4) angeordnet und mit dieser in einer gemeinsamen vertikalen Ebene schwenkbar ist.

2. Werkzeugmaschine nach Anspruch 1,
**dadurch gekennzeichnet, dass**
die Werkstückhaltevorrichtung (5) stufenlos schwenkbar ist und/oder dass die Schwenkachse (B) der Werkstückhaltevorrichtung (5) als NC-Achse ausgebildet ist.

3. Werkzeugmaschine nach einem der vorhergehenden Ansprüche,
**dadurch gekennzeichnet, dass** zusätzlich
mindestens ein Hartdrehwerkzeug (21) und/oder mindestens ein Honwerkzeug vorgesehen ist.

4. Werkzeugmaschine nach einem der vorhergehenden Ansprüche,
**dadurch gekennzeichnet, dass**
die Werkstückhaltevorrichtung (5) und die Werkzeuge (11, 12, 14, 21) nebeneinander an der Vorderwand des Maschinenständers (1) angeordnet sind und/oder dass die Werkzeuge (11, 12, 14, 21) horizontal ausgerichtet sind.

5. Werkzeugmaschine nach einem der vorhergehenden Ansprüche,
**dadurch gekennzeichnet, dass**
die Werkstückhaltevorrichtung (5) derart schwenkbar ist, dass ihre Werkstückaufnahme (7) nach unten weist.

6. Werkzeugmaschine nach einem der vorhergehenden Ansprüche,
**dadurch gekennzeichnet, dass** mindestens ein Teil der Werkzeuge (11, 12, 14) derart übereinander angeordnet ist, dass diese von der Werkstückhaltevorrichtung (5) wahlweise zur Bearbeitung anfahrbar sind.

7. Werkzeugmaschine nach einem der vorhergehenden Ansprüche,
**dadurch gekennzeichnet, dass**
direkt unter der Werkstückhaltevorrichtung (5) eine insbesondere getaktete und bevorzugt durch den Maschinenständer hindurchgeführte Werkstückzuführeinrichtung (19) angeordnet ist.

8. Werkzeugmaschine nach einem der vorhergehenden Ansprüche,
**dadurch gekennzeichnet, dass**
beidseits der Werkstückhaltevorrichtung (5), insbesondere symmetrisch zu dieser, Werkzeuge (11, 12, 14; 21) angeordnet sind und dass die Werkstückhaltevorrichtung (5) von der einen Seite zur anderen Seite schwenkbar ist, wobei die Werkzeuge (11, 12, 14, 21) auf beiden Seiten der Werkstückhaltevorrichtung (5) bevorzugt auf je einem Schlitten (10, 20) horizontal verfahrbar sind und/oder wobei bevorzugt auf einer Seite der Werkstückhaltevorrichtung ein oder mehr Schleifwerkzeuge (11, 12, 14) und auf der anderen Seite der Werkstückhaltevorrichtung (5) ein oder mehr Hartdrehwerkzeuge (21) angeordnet sind.

9. Werkzeugmaschine nach einem der vorhergehenden Ansprüche,
**dadurch gekennzeichnet, dass**
eine Kühlmittelabführung (18) und eine Späneabführung (22) vorgesehen sind, die räumlich voneinander getrennt angeordnet sind, und/oder dass seitlich des Maschinenständers (1) ein Elektroschrank (2) und hinter dem Maschinenständer (1) ein Geräteschrank (3) angeordnet sind.

## Claims

1. A machine tool for the grinding of chuck parts, in particular a universal cylindrical grinding machine for internal grinding, surface grinding and external grinding, having a machine stand (1), a workpiece holding device (5), in particular a workpiece spindle, which is movable in the vertical direction (X axis) at a side wall of the machine stand (1) and is pivotable about an axis (B) perpendicular to the associated side wall of the machine stand (1), a dressing device (9) and at least one grinding tool, in particular an external grinding spindle (14), which is movable in the horizontal direction (Z axis) at the same side wall of the machine stand (1), and internal grinding spindles (11, 12), wherein, for the vertical movement of the workpiece holding device (5) and for the horizontal movement of the grinding tools, a respective single-axis linear carriage (4, 10, 20) with a common, vertical, carriage movement plane is provided and wherein the dressing device (9) is arranged together with the workpiece holding device (5) on its single-axis linear carriage (4) and is pivotable therewith in a common vertical plane.

2. A machine tool in accordance with claim 1, **characterised in that** the workpiece holding device (5) is continuously pivotable; and/or **in that** the pivot axis (B) of the workpiece holding device (5) is made as an NC axis.

3. A machine tool in accordance with any one of the preceding claims, **characterised in that** at least one hard lathe tool (21) and/or at least one honing tool is/ are additionally provided.

4. A machine tool in accordance with any one of the preceding claims, **characterised in that** the workpiece holding device (5) and the tools (11, 12, 14, 21) are arranged next to one another at the front wall of the machine stand (1); and/or **in that** the tools (11, 12, 14, 21) are aligned horizontally.

5. A machine tool in accordance with any one of the preceding claims, **characterised in that** the workpiece holding device (5) is pivotable such that its workpiece mount (7) faces downwardly.

6. A machine tool in accordance with any one of the preceding claims, **characterised in that** at least some of the tools (11, 12, 14) are arranged over one another such that they can be approached selectively by the workpiece holding device (5) for working.

7. A machine tool in accordance with any one of the preceding claims, **characterised in that** a workpiece supply device (19), in particular a clocked workpiece supply device which is preferably guided through the machine stand, is arranged directly beneath the workpiece holding device (5).

8. A machine tool in accordance with any one of the preceding claims, **characterised in that** tools (11, 12, 14; 21) are arranged at both sides of the workpiece holding device (5), in particular symmetrically thereto; and **in that** the workpiece holding device (5) is pivotable from the one side to the other side, with the tools (11, 12, 14, 21) being horizontally movable on both sides of the workpiece holding device (5), preferably on one carriage (10, 20) each, and/or with one or more grinding tools (11, 12, 14) preferably being arranged on one side of the workpiece holding device and one or more hard lathe tools (21) being arranged on the other side of the workpiece holding device (5).

9. A machine tool in accordance with any one of the preceding claims, **characterised in that** a coolant drain (18) and a swarf removal device (22) are provided which are arranged spatially separate from one another; and/or **in that** an electrical cabinet (2) is arranged to the side of the machine stand (1) and a tool cabinet (3) is arranged behind the machine stand (1).

## Revendications

1. Machine-outil pour le meulage de pièces de mandrin, en particulier rectifieuse cylindrique universelle pour rectification intérieure, rectification plane et rectification extérieure, comportant un bâti de machine (1), un dispositif de retenue de pièce à oeuvrer (5), en particulier une broche porte-pièce, déplaçable en translation en direction verticale (axe X) sur une paroi latérale du bâti de machine (1) et en pivotement autour d'un axe (B) perpendiculaire à la paroi latérale associée du bâti de machine (1), une dresse-meule (9), et au moins un outil de meulage, en particulier une broche de rectification extérieure (14) et des broches de rectification intérieures (11, 12), déplaçables en translation en direction horizontale (axe Z) sur la même paroi latérale du bâti de machine (1), machine-outil dans laquelle, pour le mouvement vertical du dispositif de retenue de pièce à oeuvrer (5) et pour le mouvement horizontal des outils de meulage, il est prévu un chariot linéaire (4, 10, 20) monoaxial respectif avec plan de mouvement de chariot vertical commun, et dans laquelle la dresse-meule (9) est agencée conjointement avec le dispositif de retenue de pièce à oeuvrer (5) sur son chariot linéaire (4) monoaxial et peut pivoter avec celui-ci dans un plan vertical commun.

2. Machine-outil selon la revendication 1, **caractérisée en ce que** le dispositif de retenue de pièce à oeuvrer (5) peut être pivoté de manière continue et/ou **en ce que** l'axe de pivotement (B) du dispositif de retenue de pièce à oeuvrer (5) est réalisé sous forme d'axe à commande numérique.

3. Machine-outil selon l'une quelconque des revendications précédentes, **caractérisée en ce qu'**il est prévu additionnellement au moins un outil de tournage dur (21) et/ou au moins un outil de rodage.

4. Machine-outil selon l'une quelconque des revendications précédentes, **caractérisée en ce que** le dispositif de retenue de pièce à oeuvrer (5) et les outils (11, 12, 14, 21) sont agencés les uns à côté des autres sur la paroi antérieure du bâti de machine (1) et/ou **en ce que** les outils (11, 12, 14, 21) sont orientés à l'horizontale.

5. Machine-outil selon l'une quelconque des revendications précédentes, **caractérisée en ce que** le dispositif de retenue de pièce à oeuvrer (5) peut pivoter de telle sorte que sa fixation de pièce est tournée vers le bas.

6. Machine-outil selon l'une quelconque des revendications précédentes, **caractérisée en ce qu'**au moins une partie des outils (11, 12, 14) sont agencés les uns aux dessus des autres de telle sorte que ceux-ci peuvent être approchés sélectivement pour l'usinage par le dispositif de retenue de pièce à oeuvrer (5).

7. Machine-outil selon l'une quelconque des revendications précédentes, **caractérisée en ce que** le dispositif de retenue de pièce à oeuvrer (5) directement au-dessous du dispositif de retenue de pièce à oeuvrer (5) est agencé un dispositif d'amenée de pièce à oeuvrer (9), en particulier cadencé et qui passe de préférence à travers le bâti de machine.

8. Machine-outil selon l'une des revendications précédentes, **caractérisée en ce que** des outils (11, 12, 14 ; 21) sont agencés des deux côtés du dispositif de retenue de pièce à oeuvrer (5), en particulier symétriquement à celui-ci, et **en ce que** le dispositif de retenue de pièce à oeuvrer (5) peut être pivoté depuis un côté vers l'autre, les outils (11, 12, 14, 21) sur les deux côtés du dispositif de retenue de pièce à oeuvrer (5) étant déplaçables en translation horizontale de préférence sur un chariot (10, 20) respectif et/ou un ou plusieurs outils de meulage (11, 12, 14) étant agencé(s) d'un côté du dispositif de retenue de pièce à oeuvrer et un ou plusieurs outils de tournage dur (21) étant agencé(s) sur l'autre côté du dispositif de retenue de pièce à oeuvrer (5).

9. Machine-outil selon l'une des revendications précédentes, **caractérisée en ce qu'**il est prévu une évacuation de produit réfrigérant (18) et une évacuation de copeaux (22) qui sont agencées séparément l'une de l'autre dans l'espace et/ou **en ce qu'**une armoire électrique (2) est agencée latéralement au bâti de machine (1) et une armoire d'appareil (3) est agencée derrière le bâti de machine (1).
